# EUROPÄISCHE PATENTSCHRIFT

(11) **EP 2 845 297 B1**
(45) Veröffentlichungstag und Bekanntmachung des Hinweises auf die Patenterteilung: **13.04.2022**
(21) Anmeldenummer: 13719735.6
(22) Anmeldetag: 29.04.2013
(51) Int. Cl.: H02K 3/52

(54) **ELEKTROMOTOR**
ELECTRIC MOTOR
MOTEUR ELECTRIQUE

(30) Priorität: 03.05.2012 DE 102012008651
(43) Veröffentlichungstag der Anmeldung: 11.03.2015
(73) Patentinhaber: SEW-EURODRIVE GmbH & Co. KG, 76646 Bruchsal (DE)
(72) Erfinder: PARTHEYMÜLLER, Alexander, 76139 Karlsruhe (DE); SAUMER, Daniel, 76149 Karlsruhe (DE); HETTEL, Domenik, 76474 Au am Rhein (DE); ZELLER, Peter, 68723 Oftersheim (DE); GÜNNEL, Gabriel, 09212 Limbach-Oberfrohna (DE)
(86) Internationale Anmeldenummer: PCT/EP2013/001275
(87) Internationale Veröffentlichungsnummer: WO 2013/164082

(56) Entgegenhaltungen:
- WO-A2-2011/151692
- DE-A1-102008 040 732
- US-A1- 2003 201 688

## Beschreibung

Die Erfindung betrifft einen Elektromotor.

Es ist allgemein bekannt, dass ein Elektromotor eine Statorwicklung aufweist, deren Endbereiche der Statorwicklungsdrähte miteinander verschaltet werden müssen, beispielsweise in Sternschaltung oder Dreieckschaltung bei einem Drehstrommotor oder in entsprechend geeigneter Verschaltung der Einzelzahnwicklungen eines mit bewickelten Einzelzähnen ausgeführten Stators,

Die US 2003/0201688 A1 offenbart einen Elektromotor,
aufweisend einen Verschaftungsring und einen Stator mit Statorwicklungen und einer Endkappe,
wobei der Verschaltungsring ein aus Kunststoff gefertigtes Aufnahmeteil aufweist, wobei auf der axial oberen Seite des Verschaltungsrings kreisförmig verlaufende, zueinander koaxial ausgerichtete Nuten angeordnet sind, in welchen Stromschienen aufgenommen sind,
wobei jeweilige Endbereiche, insbesondere Endabschnitte, der Statorwicklungsdrähte des Stators des Elektromotors mit Kontaktabschnitten der elektrischen Leitungen des Verschaltungsrings verbunden sind,
wobei die Kontaktabschnitte radial außen am Verschaltungsring angeordnet sind, wobei sich Verbindungsabschnitte erstrecken von radial außen, wo sich der Übergang zum jeweiligen Kontaktabschnitt befindet, nach radial innen bis zur radialen Position der jeweils zu kontaktierenden Stromschiene,
wobei ein jeweiliger Kontaktabschnitt Fangarme aufweist, mit welchen ein jeweiliger Endbereich einfangbar und kraftschlüssig haltbar, insbesondere zwischen den Fangarmen einklemmbar, ist,
wobei die durch die Fangarme jedes Kontaktabschnitts erzeugte Fangbereichsöffnung in Umfangsrichtung ausgerichtet ist,
wobei die Endbereiche des Statorwicklungsdrahtes in axialer Richtung gerichtet, im Wesentlichen parallel ausgerichtet und auf gleichem Radialabstand zur Rotorwellenachse angeordnet sowie in Umfangsrichtung regelmäßig voneinander beabstandet sind,
wobei die Kontaktabschnitte V-, U- oder C-förmig gestaltet sind,
wobei ein jeweiliger Endbereich mittels Schweißen elektrisch verbunden ist mit einem oder den Fangarmen des Kontaktabschnitts.

Der Erfindung liegt daher die Aufgabe zugrunde, einen Elektromotor einfach und schnell herstellbar zu machen.

Erfindungsgemäß wird die Aufgabe bei dem Elektromotor nach den in Anspruch 1 angegebenen Merkmalen gelöst.

Erfindungsgemäß weist der Elektromotor einen Verschaltungsring und einen Stator mit Statorwicklungen auf,
wobei jeweilige Endbereiche, insbesondere Endabschnitte, der Statorwicklungsdrähte des Stators des Elektromotors mit Kontaktabschnitten der elektrischen Leitungen eines Verschaltungsrings verbunden sind.

Von Vorteil ist dabei, dass eine einfache und schnelle Herstellung ermöglicht ist.

Erfindungsgemäß weist ein jeweiliger Kontaktabschnitt Fangarme auf, mit welchen ein jeweiliger Endbereich einfangbar und kraftschlüssig haltbar, insbesondere zwischen den Fangarmen einklemmbar, ist. Von Vorteil ist dabei, dass durch eine Drehbewegung des Verschaltungsrings die Kontaktabschnitte einfangbar und dann auch kraftschlüssig und danach stoffschlüssig, insbesondere mittels Kontaktschweißen, verbindbar sind.

Erfindungsgemäß ist ein jeweiliger Endbereich mittels Kontaktschweißen elektrisch verbunden mit einem oder den Fangarmen des Kontaktabschnitts. Von Vorteil ist dabei, dass eine thermisch stabile Verbindung ohne Lötzinn ausführbar ist.

Bei einer vorteilhaften Ausgestaltung sind die elektrischen Leitungen als Stanz-Biegeteil ausgeführt, insbesondere als aus einem Kupfer-haltigen Blech oder Kupferblech gefertigtes Stanz-Biegeteil. Von Vorteil ist dabei, dass geringe Ohmsche Verluste auftreten.

Bei einer vorteilhaften Ausgestaltung ist Kontaktabschnitt, Verbindungssteg und Stromschiene jeweils einstückig ausgeführt als Kupferleitung als Stanzbiegeteil. Somit sind sie einstückig, einfach und kostengünstig ausführbar.

Erfindungsgemäß sind die Stromschienen in Nuten des Verschaitungsrings angeordnet. Von Vorteil ist dabei, dass die Nuten konzentrisch in der Stirnseite des Verschaltungsrings anordenbar sind und somit eine einfache Herstellung ausführbar ist.

Erfindungsgemäß ist der Verschaltungsring aus Kunststoff gefertigt, insbesondere als Kunststoffspritzgussteil. Von Vorteil ist dabei, dass eine einfache kostengünstige Herstellung ermöglicht ist.

Bei einer vorteilhaften Ausgestaltung weist der Stator ein Blechpaket auf, das aus Einzelzähnen zusammengesetzt ist, wobei die Einzelzähne jeweils bewickelt sind mit einer jeweiligen Statorwicklung,
wobei der Statorwicklungsdraht jeder Statorwicklung zwei Endbereiche aufweist. Von Vorteil ist dabei, dass zwar eine Einzelzahnbewicklung ausführbar ist, die viele Endabschnitte aufweist. Aber die Erfindung offenbart hierzu eine effektive, wenig aufwendige Verbindungsmethode.

Erfindungsgemäß erstreckt sich der jeweilige Verbindungssteg in radialer Richtung und erstecken sich die Stromschienen in Umfangsrichtung. Von Vorteil ist dabei, dass die Leitungen in einfacher Weise als Stanz-Biegeteil herstellbar sind.

Erfindungsgemäß ist die durch die Fangarme jedes Kontaktabschnitts erzeugte Fangbereichsöffnung in Umfangsrichtung ausgerichtet. Von Vorteil ist dabei, dass ein synchrones Einfangen aller Endabschnitte ausführbar ist.

Bei einer vorteilhaften Ausgestaltung sind die Stromschienen in vier konzentrisch zueinander angeordneten Nuten des Verschaltungsrings angeordnet. Von Vorteil ist dabei, dass ein einfaches Herstellen durch Einlegen der Stromschienen in die Nuten ausführbar ist.

Erfindungsgemäß sind die Fangarme V-förmig oder U-Förmig oder C-förmig geöffnet, insbesondere wobei die Fangarme die Schenkel des V bilden. Von Vorteil ist dabei, dass die Kontaktabschnitte einfach zu fertigen sind.

Bei einer vorteilhaften Ausgestaltung sind die Nuten zur Aufnahme der Stromschienen in der axial gerichteten Stirnseite des Verschaltungsrings angeordnet. Von Vorteil ist dabei, dass ein Vergießen mittels Vergussmasse in einfacher Weise ausführbar ist.

Weitere Vorteile ergeben sich aus den Unteransprüchen.

Die Erfindung wird nun anhand von Abbildungen näher erläutert:
In der Figur 1 ist eine Schrägansicht auf einen erfindungsgemäßen Verschaltungsring für einen Elektromotor gezeigt, wobei Verbindungsstege 2 nur schematisch angedeutet sind.

in der Figur 2 ist eine zugehörige Draufsicht gezeigt.

In der Figur 3 ist eine Seitenansicht für ein nicht zur Erfindung gehörendes Beispiel gezeigt.

In der Figur 4 ist im Gegensatz zur Figur 1 und Figur 2 eine erfindungsgemäße ausführbare Verschaltung gezeigt, wobei die Verbindungsabschnitte 2 sich radial immer nur bis zu der jeweiligen zugeordneten Stromschiene 80 erstrecken. Die Endbereiche 21 sind dabei gerade beim Eintreten in den Fangbereich der Fangarme dargestellt.

In der Figur 5 ist der Verschaltungsring 1 im mit der Endkappe 51 verbundenen Zustand gezeigt.

In der Figur 6 ist das Statorblechpaket 50 mit am axialen Endbereich des Statorblechpakets 50 aufgesetzter Endkappe 51 gezeigt, wobei auch die Köpfe 60 an den Halteabschnitten 61 gezeigt sind, wobei die Köpfe 60 zum Eingreifen in die Vertiefungen (5, 32) vorgesehen sind.

In der Figur 7 ist der Verschaltungsring 1 gezeigt, wobei die Vertiefungen (5, 32) ausgeblendet sind, also herausgenommen sind. Ebenfalls ausgeblendet sind die Stanz-Biegeteile, so dass die Nuten 4 zur Aufnahme der Stromschienen 80 der Stanz-Biegeteile gut sichtbar sind. Am axial oberen Randbereich sind Aussparungen 71 sichtbar, die in Umfangsrichtung regelmäßig voneinander beabstandet sind und zur Festlegung der Umfangswinkelposition der Stanz-Biegeteile vorgesehen sind, indem die Verbindungsabschnitte 2 der Stanz-Biegeteile in die Aussparungen 71 einlegbar sind.

In der Figur 8 ist ein vergrößerter Ausschnitt des Verschaltungsrings 1 gezeigt, so dass die laschenartigen Kontaktabschnitte 3 mit den V-förmig angeordneten Fangarmen vergrößert sichtbar sind.

In der Figur 9 ist eine Alternative zum Verschaltungsring 1 der Figur 5 gezeigt.

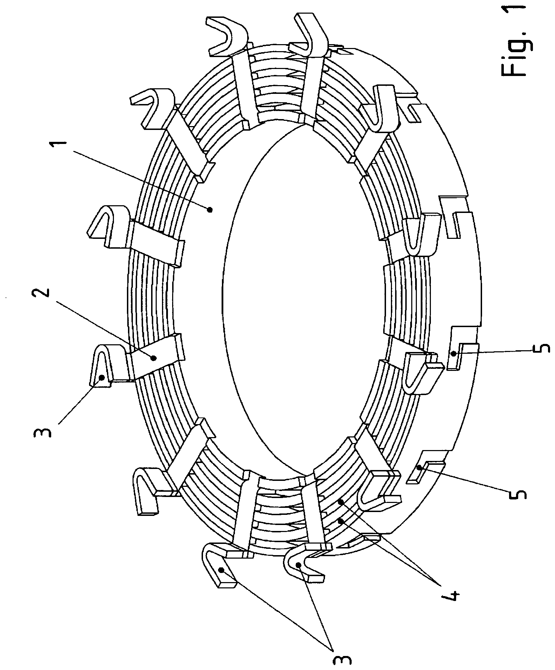

Wie in Figur 1 gezeigt, weist gemäß der Erfindung der Verschaltungsring ein erfindungswesentliches Aufnahmeteil 1 auf, das aus Kunststoff gefertigt ist. Dabei sind erfindungsgemäß an seiner axial oberen Seite kreisförmig verlaufende, zueinander koaxial ausgerichtete Nuten 4 angeordnet, in weichen Stromschienen aufnehmbar sind.

In Umfangsrichtung zueinander regelmäßig beabstandete Verbindungsstege 2 sind auf dem jeweils gleichen Radialabstand angeordnet. Ein jeweiliger Verbindungssteg 2 ist mit einer jeweiligen Stromschiene elektrisch verbunden, insbesondere einstückig ausgeführt, wobei die Verbindung in Figur 1 nicht dargestellt ist.

An dem von der jeweiligen Stromschiene abgewandten Ende des jeweiligen Verbindungsstegs 2 ist ein V-förmig gebogener, laschenförmiger Kontaktabschnitt 3 elektrisch verbunden, insbesondere einstückig ausgeführt.

Vorzugsweise sind die Verbindungsstege 2 mit den Kontaktabschnitten 3 und Stromschienen als mehrstückiges Stanz-Biegeteil hergestellt, also als mehrere Stanz-Biegeteile.

Die jeweiligen Stanz-Biegeteile sind eingelegt in die jeweiligen Nuten 4 des Aufnahmeteils 1 und mittels Vergussmasse vergossen und somit stoffschlüssig verbunden mit dem Aufnahmeteil 1.

Am äußeren Umfang des Aufnahmeteils sind gemäß der Erfindung in Umfangsrichtung voneinander regelmäßig beabstandete Ausnehmungen 5, nämlich radial gerichtete Vertiefungen, angeordnet, mit denen ein Verbinden des Verschaltungsrings mit dem Stator ausführbar ist.

Hierzu weist der Stator eine Endkappe auf, die in Umfangsrichtung regelmäßig voneinander beabstandete, auf jeweils gleichem Radialabstand zur Rotorwellenachse angeordnete Halteabschnitte aufweist, deren jeweiliger, insbesondere in radialer Richtung verbreitert ausgeführte Kopf in eine jeweilige Vertiefung 5 eingreift, insbesondere in radialer Richtung. Dabei werden die Halteabschnitte beim Verbinden mit dem Verschaltungsring in radialer Richtung leicht ausgelenkt, so dass eine radial gerichtete elastische Rückstellkraft die Köpfe in die Vertiefungen drückt.

Die Vertiefungen 5 sind erfindungsgemäß gleichartig ausgeführt und weisen in radialer Richtung dieselbe Tiefe auf. Sie verlaufen vom Rand des Verschaltungsrings ausgehend zunächst in axialer Richtung und dann auch in Umfangsrichtung.

Somit ist - erfindungsgemäß - beim Verbinden des Verschaltungsrings mit der Endkappe des Stators ein Verschieben in axialer Richtung und ein nachfolgendes Verdrehen in Umfangsrichtung auszuführen.

Der Stator weist ein Statorblechpaket auf, das Einzelzähne aufweist, die jeweils mit einer Statorwicklung versehen sind.

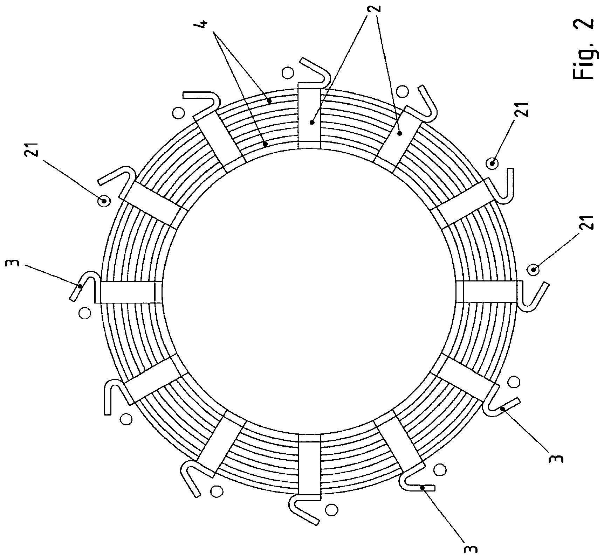

Die zugehörigen Endbereiche 21 des Statorwicklungsdrahtes sind erfindungsgemäß in axialer Richtung gerichtet, wie in Figur 2 dargestellt. Die Endbereiche 21 sind erfindungsgemäß zueinander im Wesentlichen parallel ausgerichtet und auf gleichem Radialabstand zur Rotorwellenachse angeordnet. Außerdem sind sie erfindungsgemäß in Umfangsrichtung voneinander regelmäßig beabstandet.

Auf diese Weise ist nun ein schnelles und wenig aufwendiges elektrisches Verbinden der Endbereiche 21 mit den Kontaktabschnitten 3 ermöglicht, indem erfindungsgemäß beim relativen Verdrehen des Verschaltungsrings gegenüber der Endkappe die Endbereiche 21 in den vom Kontaktabschnitt aufgespannten Innenbereich, insbesondere also in den vom V des V-förmigen Kontaktabschnitts aufgespannten Innenbereich, eingefangen werden. Der jeweilige Kontaktabschnitt fädelt also den jeweiligen Endbereich 21 ein bis zur Verbindungsposition an der Innenspitze des V. Sobald die Verdrehung beendet ist, wird ein Kontaktschweißverbinden ausgeführt. Hierzu werden zunächst die jeweiligen Schenkel des Kontaktabschnitts, also Fangarme des Kontaktabschnitts, aufeinandergedrückt, indem sie entsprechend gebogen werden, bis der Endbereich kraftschlüssig gehalten wird, insbesondere eingeklemmt wird, von den Fangarmen des Kontaktabschnitts. Sodann wird ein Kontaktschweißen ausgeführt, damit die elektrische Verbindung zwischen Endbereich 21 und Kontaktabschnitt ohne Lötzinn ausführbar ist.

Die Vertiefungen 5 weisen also einen L-förmigen Verlauf auf, so dass zuerst das axiale Einschieben und danach die Verdrehung auszuführen ist.

Auf diese Weise ist also durch einen einzigen Verfahrensschritt des Verdrehens einerseits eine mechanische Verbindung zwischen Verschaltungsring und Stator, insbesondere Endkappe, bewirkbar und andererseits ein Einfangen der Endbereiche mittels der jeweils zugeordneten Kontaktabschnitte erreichbar, so dass ein Kontaktschweißverbinden in einfacher Weise ausführbar ist.

Statt eines V ist erfindungsgemäß auch ein U oder C verwendbar.

Der Verschaltungsring 1 spannt eine Ringebene auf, deren Normale die axiale Richtung ist, wobei diese Normalenrichtung parallel zur Rotorachsrichtung ausgerichtet ist. Die Umfangsrichtung verläuft entlang des Rings, dessen maximaler Radialabstand konstant ist in Abhängigkeit von der Umfangsrichtung.

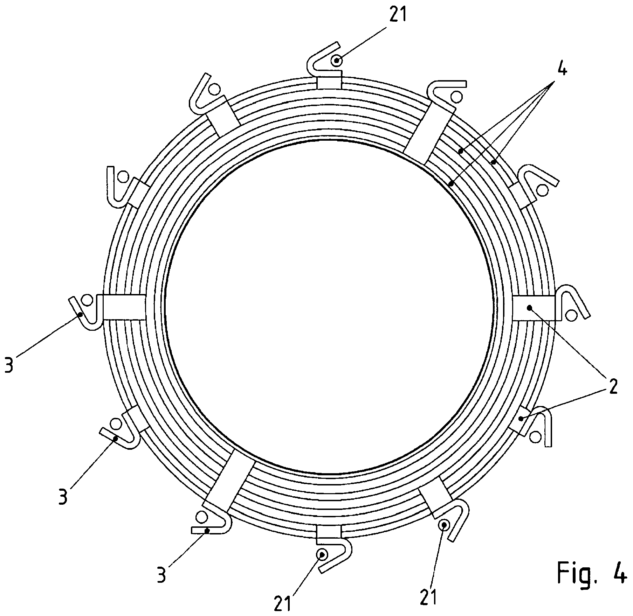

Wie in Figur 4 gezeigt, erstrecken sich gemäß der Erfindung die Verbindungsabschnitte 2 von radial außen, also vom Übergang zum jeweiligen Kontaktabschnitt 3, nach radial innen bis zur radialen Position der jeweils zu kontaktierenden Stromschiene 80. Der Verschaltungsring 1 ist schon soweit gedreht, dass die Endbereiche 21 schon im Fangbereich der V-förmig angeordneten Fangarme des Kontaktabschnitts 3 sind.

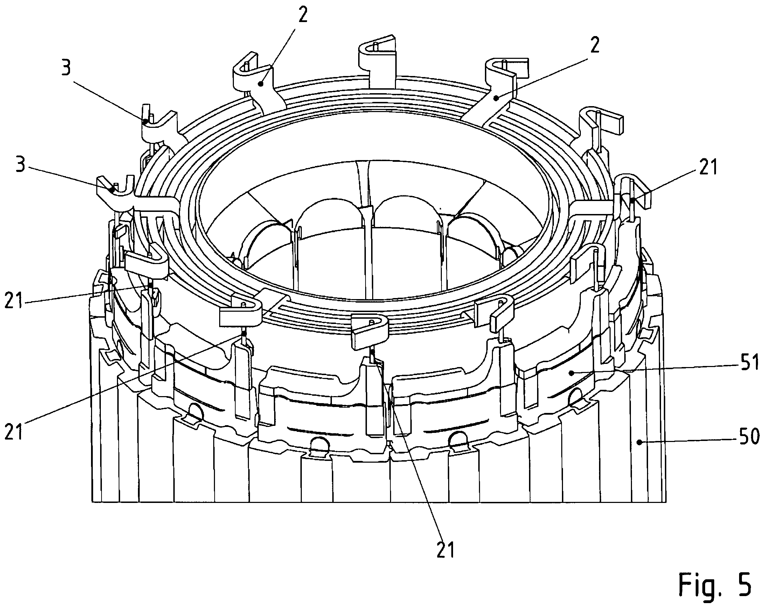

Wie in Figur 5 gezeigt, ist die Endkappe 51 auf den axialen Endbereich des mit Einzelzahnwicklungen bewickelten Statorblechpakets 50 aufgesetzt. Die Endbereiche 21 sind wiederum jeweils im Fangbereich der V-förmig angeordneten Fangarme des Kontaktabschnitts 3, insbesondere fast in der Spitze des V. Im nachfolgenden Verfahrensschritt werden die Fangarme aufeinander zu bewegt und somit der jeweilige Endbereich 21 eingeklemmt zwischen den Fangarmen. Nachfolgend ist dann das Kontaktschweißen ausführbar, bei dem kein Lötzinn erforderlich ist und welches eine stoffschlüssige elektrische Verbindung erzeugbar macht, die bis zu hohen Betriebstemperaturen einsetzbar ist.

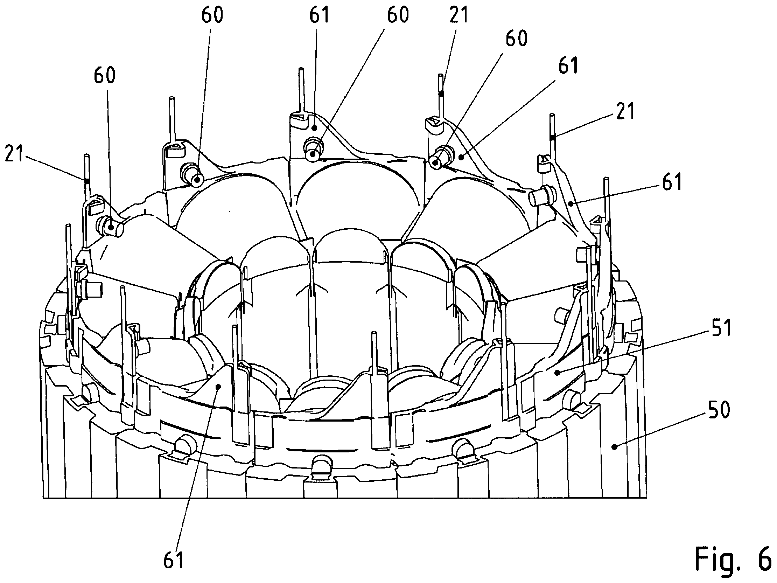

Wie in Figur 6 gezeigt, weisen erfindungsgemäß die an der Endkappe 51 einstückig ausgeformten Halteabschnitte 61 nach radial innen gerichtet herauskragende Köpfe 60 oder Pins auf, welche als Eingriffabschnitte, also Abschnitte zum Eingreifen in die Vertiefungen (5, 32) an der radialen Außenwand des Verschaltungsrings 1 vorgesehen sind.

Zur Verbesserung der Verbindung zwischen der Endkappe 51 und dem Verschaitungsring 1 wird Klebstoff im Bereich der Vertiefungen (5, 32) eingebracht, so dass die Köpfe 60 stoffschlüssig verbunden werden.

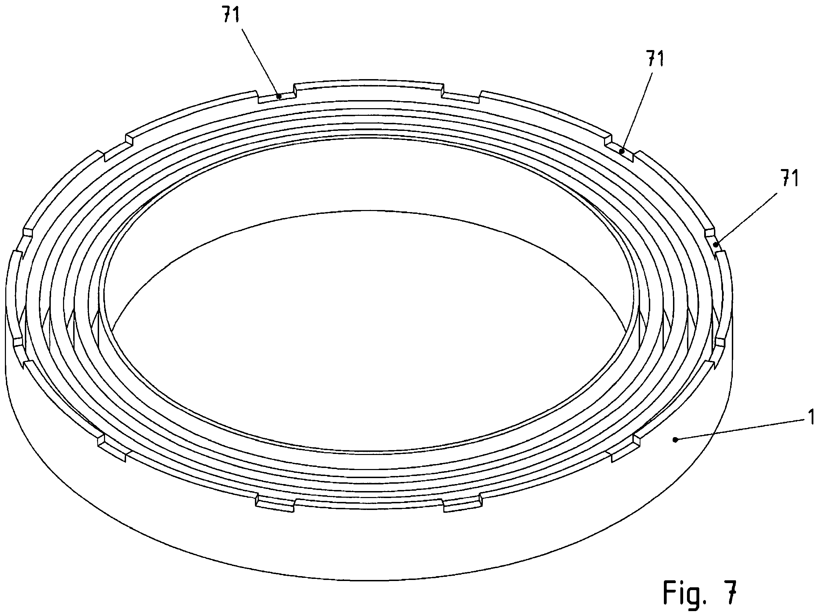

Figur 7 ist ohne Vertiefungen 5 oder 32 dargestellt, kann aber beide aufweisen. An den Aussparungen 71 Siegen die Kontaktabschnitte 3 auf und werden somit in ihrer Umfangswinkellage definiert. Die Aussparungen 71 sind am axial oberen, also an der vom Statorblechpaket 50 abgewandten axialen Seite des Verschaltungsrings 1 angeordnet.

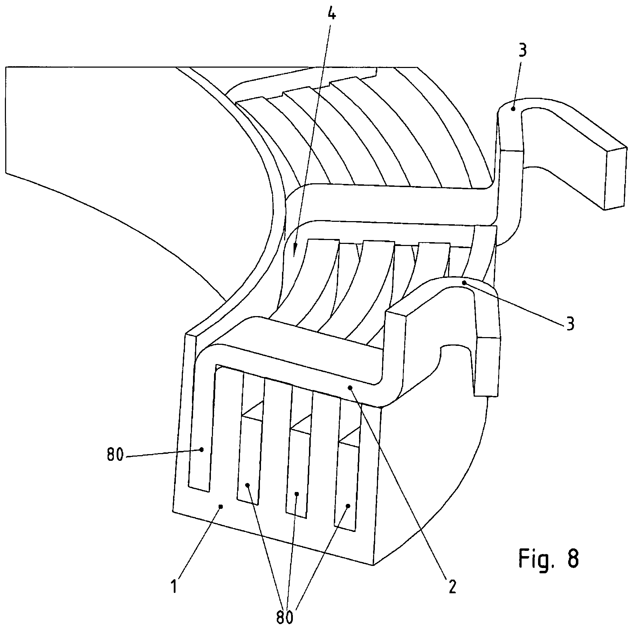

Wie in Figur 8 dargestellt, erstreckt sich der Verbindungsabschnitt 2 radial bis zur jeweils zugeordneten Stromschiene 80. Beispielhaft erstreckt sich der vordere Verbindungsabschnitt 2 radial bis zur von radial innen aus gezählt zweiten Stromschiene 80 und der in Figur 8 hinten dargestellte erstreckt sich radial bis zur von radial innen aus gezählt vierten Stromschiene 80. Die Stromschienen 80 sind entweder mit der Drehstromphase R, S, T oder dem Nullleiter angeschlossen,

Der Elektromotor ist als vorzugsweise umrichtergespeister Drehstrommotor betreibbar.

Bei einem weiteren nicht zur Erfindung gehörenden Beispiel ist statt des Eingreifens der Köpfe 60 in Vertiefungen (5, 32) und Kiebeverbindens alternativ ein Einklipsen der Köpfe oder ein Einrasten der Köpfe in entsprechende Bereiche des Verschaltungsrings ausführbar.

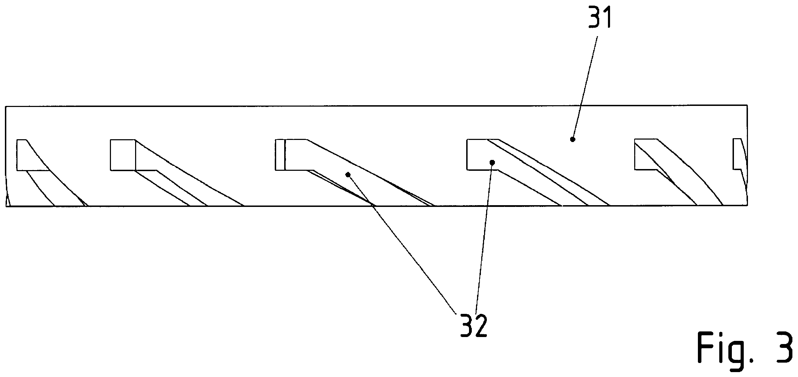

Bei einem weiteren nicht zur Erfindung gehörenden Beispiel ist statt des L-förmigen Verlaufs der Vertiefung 5 im Aufnahmeteil 1 ein schraubenartiger Verlauf 32 ausgeführt. Somit ist beim Verbinden des Verschaltungsrings mit dem Stator ein gleichzeitiges axiales Aufschieben und Verdrehen ausführbar, also eine Schraubenbewegung. Hierzu zeigt Figur 3 ein Aufnahmeteil 31, insbesondere aus Kunststoff, welches dem Aufnahmeteil 1 aus Figur 1 gleicht mit Ausnahme der schraubenartig verlaufenden Ausnehmungen 32, also Vertiefung, welche die L-förmigen Vertiefungen des Ausführungsbeispiels nach Figur 1 ersetzen. In diesem Sinne ist in der Figurenbeschreibung zu den anderen Figuren auch Bezug genommen auf den Verlauf 32, der als Alternative zu dem L-förmigen Vertiefungsverlauf 5 einsetzbar ist.

Bei einem weiteren nicht zur Erfindung gehörenden Beispiel ist der jeweilige Endbereich 21 am Halteabschnitt 61 gehalten durch eine Einklipsverbindung. Hierzu weist der Halteabschnitt eine entsprechende bei Einführen des Wicklungsdrahtes elastisch auslenkbare Aufnahme auf, so dass nach Einführen ein formschlüssiges Halten des Endbereichs 21 bewirkt ist.

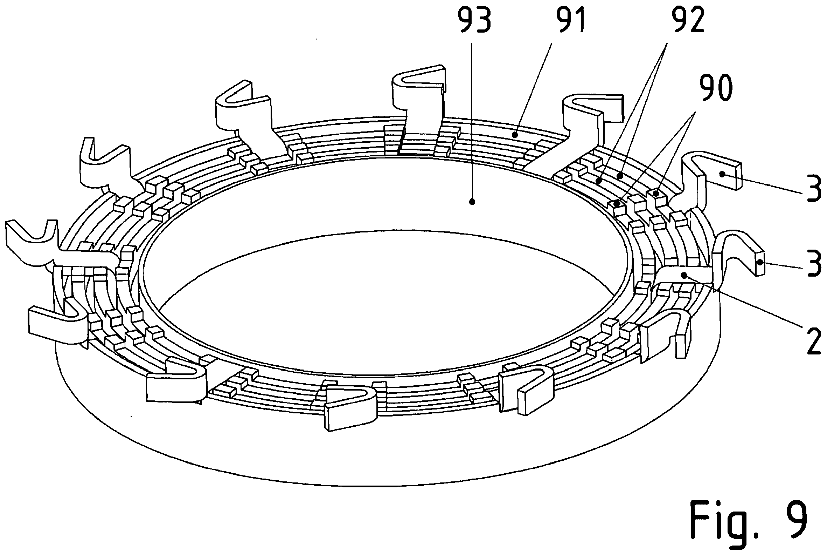

Wie in Figur 9 gezeigt ist die dortige äußere und innere Wand (91, 93) in axialer Richtung höher als die Zwischenwände 92. Somit ist Vergussmasse durch die innere und äußere Wand (91,93) begrenzt und fließt vor dem Aushärten nicht nach radial innen oder außen weg.

Die Wände (91, 92, 93) begrenzen dabei jeweils die Nuten 4. Vorzugsweise ist der Verschattungsring 1 durch Kunststoffspritzguss hergestellt und die Nuten sind somit durch den Spritzguss erzeugt, müssen also nicht bearbeitet werden.

Zur Fixierung, insbesondere Begrenzung in Umfangsrichtung, der Verbindungsstege 2 sind axial hervorstehende höckerartige Erhebungen 90 an den Zwischenwänden 92 angeordnet. Diese sind durch Spritzguss einfach hersteilbar. Zusätzlich sind auch wiederum die Aussparungen, also Vertiefungen, 71 vorgesehen, so dass auch ein Verbindungssteg 2 fixierbar ist, der mit der radial äußersten Stromschiene 80 verbunden ist und somit nicht über eine Zwischenwand 92 führt.

### Bezugszeichenliste

- 1: Aufnahmeteil, insbesondere aus Kunststoff
- 2: Verbindungssteg
- 3: Kontaktabschnitt, laschenförmig
- 4: Nuten zur Aufnahme der Stromschienen 80
- 5: Ausnehmung, insbesondere Vertiefung
- 21: Endbereich eines jeweiligen Statorwicklungsdrahts
- 31: Aufnahmeteil, insbesondere aus Kunststoff
- 32: Ausnehmung, insbesondere Vertiefung
- 50: Statorblechpaket
- 51: Endkappe
- 60: Kopf, Eingreifabschnitt
- 61: Halteabschnitte
- 71: Vertiefung, Aussparung
- 80: Stromschiene
- 90: Erhebungen, in Umfangsrichtung höckerartige Erhebungen
- 91: äußere Wand
- 92: Zwischenwand
- 93: innere Wand

## Patentansprüche

1. **Elektromotor,**
aufweisend einen Verschaltungsring und einen Stator mit Statorwicklungen und einer Endkappe (51),
wobei der Verschaltungsring ein aus Kunststoff gefertigtes Aufnahmeteil (1, 31) aufweist, wobei auf der axial oberen Seite des Verschaltungsrings kreisförmig verlaufende, zueinander koaxial ausgerichtete Nuten (4) angeordnet sind, in welchen Stromschienen (80) aufgenommen sind,
wobei jeweilige Endbereiche (21), insbesondere Endabschnitte, der Statorwicklungsdrähte des Stators des Elektromotors mit Kontaktabschnitten (3) der elektrischen Leitungen des Verschaltungsrings verbunden sind,
wobei die Kontaktabschnitte (3) radial außen am Verschaltungsring angeordnet sind, wobei sich Verbindungsabschnitte (2) erstrecken von radial außen, wo sich der Übergang zum jeweiligen Kontaktabschnitt (3) befindet, nach radial innen bis zur radialen Position der jeweils zu kontaktierenden Stromschiene (80),
wobei ein jeweiliger Kontaktabschnitt (3) Fangarme aufweist, mit welchen ein jeweiliger Endbereich (21) einfangbar und kraftschlüssig haltbar, insbesondere zwischen den Fangarmen einklemmbar, ist,
wobei die durch die Fangarme jedes Kontaktabschnitts (3) erzeugte Fangbereichsöffnung in Umfangsrichtung ausgerichtet ist,
wobei am äußeren Umfang des Aufnahmeteils (1, 31) in Umfangsrichtung voneinander regelmäßig beabstandete Ausnehmungen (5), die als radial gerichtete Vertiefungen (5) ausgeführt sind, angeordnet sind,
wobei die Endkappe (51) einstückig ausgeformte Halteabschnitte (61) mit nach radial innen gerichtet herauskragenden Köpfen oder Pins (60) aufweist, welche als Abschnitte zum Eingreifen in die Vertiefungen (5) an der radialen Außenwand des Verschaltungsrings (1) vorgesehen sind,
wobei die Vertiefungen (5) gleichartig ausgeführt sind und in radialer Richtung die gleiche Tiefe aufweisen, wobei die Vertiefungen (5) vom Rand des Verschaltungsrings ausgehend zunächst in axialer Richtung und dann auch in Umfangsrichtung verlaufen, so dass beim Verbinden des Verschaltungsrings mit der Endkappe (51) des Stators ein Verschieben in axialer Richtung und ein nachfolgendes Verdrehen des Verschaltungsrings gegenüber der Endkappe (51) in Umfangsrichtung auszuführen ist,
wobei die Endbereiche (21) des Statorwicklungsdrahtes in axialer Richtung gerichtet, im Wesentlichen parallel ausgerichtet und auf gleichem Radialabstand zur Rotorwellenachse angeordnet sowie in Umfangsrichtung regelmäßig voneinander beabstandet sind,
wobei die Kontaktabschnitte (3) derart V-, U- oder C-förmig gestaltet sind,
das beim relativen Verdrehen des Verschaltungsrings gegenüber der Endkappe die Endbereiche (21) in den vom Kontaktabschnitt (3) aufgespannten Innenbereich eingefangen werden,
wobei ein jeweiliger Endbereich (21) mittels Kontaktschweißen elektrisch verbunden ist mit einem oder den Fangarmen des Kontaktabschnitts.

2. Elektromotor nach Anspruch 1,
**dadurch gekennzeichnet, dass**
die elektrischen Leitungen als Stanz-Biegeteil ausgeführt sind, insbesondere als aus einem Kupfer-haltigen Blech oder als aus Kupferblech gefertigtes Stanz-Biegeteil.

3. Elektromotor nach mindestens einem der vorangegangenen Ansprüche,
**dadurch gekennzeichnet, dass**
ein jeweiliger Kontaktabschnitt (3), Verbindungssteg (2) und Stromschiene (80) einstückig ausgeführt sind.

4. Elektromotor nach mindestens einem der vorangegangenen Ansprüche,
**dadurch gekennzeichnet, dass**
an Halteabschnitten (61) der Endkappe (51) Mittel zum Einrasten und/oder Einklipsen der Statorwicklungsdrähte, insbesondere der Endbereiche (21), angeordnet sind, insbesondere wobei die Einrastmittel beziehungsweise Einklipsmittel einstückig mit den Halteabschnitten (61) und/oder der Endkappe (51) ausgeführt sind.

5. Elektromotor nach mindestens einem der vorangegangenen Ansprüche,
**dadurch gekennzeichnet, dass**
am Verschaltungsring Aussparungen (71) zur Aufnahme und/oder zum zumindest in Umfangsrichtung formschlüssigen Verbinden eines jeweiligen Kontaktabschnitts (3) angeordnet sind, insbesondere zur Festlegung der Umfangswinkelposition eines jeweiligen Kontaktabschnitts (3).

6. Elektromotor nach mindestens einem der vorangegangenen Ansprüche,
**dadurch gekennzeichnet, dass**
der Stator ein Blechpaket aufweist, das aus Einzelzähnen zusammengesetzt ist, wobei die Einzelzähne jeweils bewickelt sind mit einer jeweiligen Statorwicklung,
wobei der Statorwicklungsdraht jeder Statorwicklung zwei Endbereiche (21) aufweist.

7. Elektromotor nach mindestens einem der vorangegangenen Ansprüche,
**dadurch gekennzeichnet, dass**
die Stromschienen (80) in vier konzentrisch zueinander angeordneten Nuten (4) des Verschaitungsrings angeordnet sind.

8. Elektromotor nach mindestens einem der vorangegangenen Ansprüche,
**dadurch gekennzeichnet, dass**
die Fangarme V-förmig geöffnet sind, wobei die Fangarme die Schenkel des V bilden.

9. Elektromotor nach mindestens einem der vorangegangenen Ansprüche,
**dadurch gekennzeichnet, dass**
die Nuten (4) zur Aufnahme der Stromschienen (80) in der axial gerichteten Stirnseite des Verschaltungsrings angeordnet sind.

## Claims

1. Electric motor
comprising an interconnection ring and a stator having stator windings and an end cap (51), wherein the interconnection ring comprises a receiving part (1, 31) made of plastics material, wherein grooves (4) extending in a circular manner that are oriented coaxially with one another and in which busbars (80) are received are arranged on the axially upper side of the interconnection ring,
wherein end regions (21), in particular end portions, of each stator winding wire of the stator of the electric motor are connected to contact portions (3) of the electrical lines of the interconnection ring,
wherein the contact portions (3) are arranged radially externally on the interconnection ring, wherein connection portions (2) extend from radially externally, where the junction to the relevant contact portion (3) is located, to radially internally as far as to the radial position of the relevant busbar (80) to be contacted,
wherein each contact portion (3) has detent levers by which a respective end region (21) can be caught and retained in a frictionally connected manner, in particular clamped between the detent levers,
wherein the catching-region opening produced by the detent levers of each contact portion (3) is oriented in the circumferential direction,
wherein recesses (5) that are regularly spaced apart from one another in the circumferential direction and are configured as radially directed depressions (5) are arranged on the outer circumference of the receiving part (1, 31),
wherein the end cap (51) comprises integrally shaped retaining portions (61) having heads or pins (60), which project radially inwards and are provided as portions for engaging in the depressions (5) on the radial outer wall of the interconnection ring (1),
wherein the depressions (5) are of a similar configuration and have the same depth in the radial direction, wherein the depressions (5) extend from the edge of the interconnection ring initially in the axial direction and then also in the circumferential direction such that, when the interconnection ring is connected to the end cap (51) of the stator, the interconnection ring is to be shifted in the axial direction and then rotated relative to the end cap (51) in the circumferential direction,
wherein the end regions (21) of the stator winding wire face in the axial direction, are oriented substantially in parallel, are arranged at the same radial distance from the rotor shaft axis and are regularly spaced apart from one another in the circumferential direction, wherein the contact portions (3) are shaped in a V-shape, a U-shape or a C-shape in such a way that, when the interconnection ring is rotated relative to the end cap, the end regions (21) are caught in the inner region spanned by the contact portion (3),
wherein each end region (21) is electrically connected to a or to the detent levers of the contact portion by means of contact welding.

2. Electric motor according to claim 1,
**characterised in that**
the electrical lines are configured as punched and bent parts, in particular as punched and bent parts made from a copper-containing sheet or as punched and bent parts made from copper sheet.

3. Electric motor according to at least one of the preceding claims,
**characterised in that**
each contact portion (3), connecting ridge (2) and busbar (80) are formed as one piece.

4. Electric motor according to at least one of the preceding claims,
**characterised in that**
means for latching-in and/or clipping-in the stator winding wires, in particular the end regions (21), are arranged on retaining portions (61) of the end cap (51), the latching means or clipping means in particular being formed in one piece with the retaining portions (61) and/or the end cap (51).

5. Electric motor according to at least one of the preceding claims,
**characterised in that**
cut-outs (71) are arranged on the interconnection ring for receiving a respective contact portion (3) and/or for interlockingly connecting a respective contact portion at least in the circumferential direction, in particular for fixing the circumferential-angle position of the relevant contact portion (3).

6. Electric motor according to at least one of the preceding claims,
**characterised in that**
the stator comprises a laminated core composed of individual teeth, a respective stator winding being wound around the individual teeth in each case,
the stator winding wire of each stator winding comprising two end regions (21).

7. Electric motor according to at least one of the preceding claims,
**characterised in that**
the busbars (80) are arranged in four concentrically arranged grooves (4) of the interconnection ring.

8. Electric motor according to at least one of the preceding claims,
**characterised in that**
the detent levers are open in a V-shape, the detent levers forming the legs of the V.

9. Electric motor according to at least one of the preceding claims,
**characterised in that**
the grooves (4) for receiving the busbars (80) are arranged in the axially facing end face of the interconnection ring.

## Revendications

1. Moteur électrique,
présentant une bague de connexion et un stator avec des enroulements de stator et une coiffe d'extrémité (51),
dans lequel la bague de connexion présente une partie de réception (1, 31) produite en matière plastique,
dans lequel des rainures (4) orientées coaxialement les unes aux autres et s'étendant en forme de cercle, dans lesquelles sont reçues des barres conductrices (80), sont disposées sur le côté axialement supérieur de la bague de connexion, dans lequel des zones d'extrémité respectives (21), en particulier des parties d'extrémité, des fils d'enroulement de stator du stator du moteur électrique sont reliées à des parties de contact (3) des lignes électriques de la bague de connexion,
dans lequel les parties de contact (3) sont disposées radialement à l'extérieur sur la bague de connexion, des parties de liaison (2) s'étendant de l'extérieur radialement, où se trouve la transition vers la partie de contact (3) respective, vers l'intérieur radialement jusqu'à la position radiale de la barre conductrice respective (80) à contacter,
dans lequel une partie de contact respective (3) présente des bras de capture avec lesquels une zone d'extrémité respective (21) peut être capturée et maintenue par force, en particulier être serrée entre les bras de capture,
dans lequel l'ouverture de zone de capture produite par les bras de capture de chaque partie de contact (3) est orientée dans la direction circonférentielle,
dans lequel des évidements (5) régulièrement espacés les uns des autres dans la direction circonférentielle, qui sont réalisés sous la forme de creux (5) orientés radialement, sont disposés sur la circonférence extérieure de la partie de réception (1, 31),
dans lequel la coiffe d'extrémité (51) présente des parties de retenue (61) formées d'une seule pièce avec des têtes ou des broches (60) en saillie orientées radialement vers l'intérieur, qui sont prévues comme des parties destinées à s'engager dans les creux (5) sur la paroi extérieure radiale de la bague de connexion (1),
dans lequel les creux (5) sont réalisés de manière similaire et présentent la même profondeur dans la direction radiale, les creux (5) s'étendant à partir du bord de la bague de connexion d'abord dans la direction axiale et ensuite également dans la direction circonférentielle, de sorte que lors de la liaison de la bague de connexion avec la coiffe d'extrémité (51) du stator, un déplacement dans la direction axiale et ensuite une rotation de la bague de connexion par rapport à la coiffe d'extrémité (51) dans la direction circonférentielle doivent être exécutés,
dans lequel les zones d'extrémité (21) du fil d'enroulement de stator sont orientées dans la direction axiale, alignées sensiblement parallèlement et disposées à la même distance radiale de l'axe d'arbre de rotor ainsi que régulièrement espacées les unes des autres dans la direction circonférentielle,
dans lequel les parties de contact (3) sont conçues en forme de V, de U ou de C de telle sorte que, lors de la rotation relative de la bague de connexion par rapport à la coiffe d'extrémité, les zones d'extrémité (21) sont capturées dans la zone intérieure définie par la partie de contact (3),
dans lequel une zone d'extrémité respective (21) est reliée électriquement par soudage par contact à un ou aux bras de capture de la partie de contact.

2. Moteur électrique selon la revendication 1,
**caractérisé en ce que**
les lignes électriques sont réalisées sous la forme de pièces découpées et pliées, en particulier sous la forme de pièces découpées et pliées produites à partir d'une tôle contenant du cuivre ou d'une tôle de cuivre.

3. Moteur électrique selon au moins l'une des revendications précédentes,
**caractérisé en ce**
**qu'**une partie de contact respective (3), une branche de liaison respective (2) et une barre conductrice respective (80) sont réalisées d'une seule pièce.

4. Moteur électrique selon au moins l'une des revendications précédentes,
**caractérisé en ce que**
des moyens d'encliquetage et/ou de clipsage des fils d'enroulement de stator, en particulier des zones d'extrémité (21), sont disposés sur des parties de retenue (61) de la coiffe d'extrémité (51), en particulier dans lequel les moyens d'encliquetage ou de clipsage sont réalisés d'une seule pièce avec les parties de retenue (61) et/ou la coiffe d'extrémité (51).

5. Moteur électrique selon au moins l'une des revendications précédentes,
**caractérisé en ce que**
des évidements (71) sont disposés sur la bague de connexion pour recevoir et/ou pour relier par complémentarité de forme, au moins dans la direction circonférentielle, une partie de contact respective (3), en particulier pour fixer la position angulaire circonférentielle d'une partie de contact respective (3).

6. Moteur électrique selon au moins l'une des revendications précédentes,
**caractérisé en ce que**
le stator présente un empilage de tôles qui est composé de dents individuelles, les dents individuelles étant chacune enroulées avec un enroulement de stator respectif,
dans lequel le fil d'enroulement de stator de chaque enroulement de stator présente deux zones d'extrémité (21).

7. Moteur électrique selon au moins l'une des revendications précédentes,
**caractérisé en ce que**
les barres conductrices (80) sont disposées dans quatre rainures (4) concentriques de la bague de connexion.

8. Moteur électrique selon au moins l'une des revendications précédentes,
**caractérisé en ce que**
les bras de capture sont ouverts en forme de V, les bras de capture formant les branches du V.

9. Moteur électrique selon au moins l'une des revendications précédentes,
**caractérisé en ce que**
les rainures (4) destinées à recevoir les barres conductrices (80) sont disposées dans la face frontale orientée axialement de la bague de connexion.
